# EUROPÄISCHE PATENTSCHRIFT

(11) **EP 1 647 431 B1**
(45) Veröffentlichungstag und Bekanntmachung des Hinweises auf die Patenterteilung: **28.01.2009**
(21) Anmeldenummer: 05022185.2
(22) Anmeldetag: 12.10.2005
(51) Int. Cl.: B60J 7/14, B60J 7/12

(54) **Kraftfahrzeug mit einem vorderen Dachteil**
Motor vehicle with a front roof panel
Véhicule automobile avec un panneau antérieur de toit

(30) Priorität: 15.10.2004 DE 102004050565
(43) Veröffentlichungstag der Anmeldung: 19.04.2006
(73) Patentinhaber: Wilhelm Karmann GmbH, 49084 Osnabrück (DE)
(72) Erfinder: Hilbk, Holger, 49201 Dissen (DE); Theuerkauf, Jürgen, 49565 Bramsche (DE)

(56) Entgegenhaltungen:
- EP-A- 0 999 079
- WO-A-20/04045881
- DE-A1- 3 930 343
- US-A- 3 473 842

## Beschreibung

Die Erfindung betrifft ein Kraftfahrzeug mit einem vorderen Dachteil, der seitliche Rahmenteile und einen bei geschlossenem Dach zumindest den Raum zwischen diesen übergreifenden mittleren Dachabschnitt umfaßt, nach dem Oberbegriff des Anspruchs 1.

Aus der DE 41 00 677 A1 ist ein Cabriolet-Fahrzeug mit einem vorderen Dachteil bekannt, bei dem ein in Fahrzeugquerrichtung mittlerer Dachabschnitt in einer Teilöffnung nach hinten verlagerbar ist und hierbei mit seitlich außen liegenden Rahmenteilen verbunden bleibt. Dabei fahren die seitlichen Rahmenteile nach hinten in Längskanäle von seitlichen C-Säulen des hinteren Dachteils ein, was nur möglich ist, wenn der Querschnitt der Rahmenteile kleiner ist als der der C-Säulen. Daher können bei geschlossenem Dach die seitlichen Rahmenteile nicht fluchtend an die C-Säulen anschließen. Für eine einheitliche Optik ist es daher zwingend, daß der mittlere Dachabschnitt bei geschlossenem Dach die seitlichen Rahmenteile übergreift, so daß diese von außen nicht sichtbar sind. Zudem besteht bei der Rückwärtsverlagerung der Rahmenteile in die C-Säulen die Gefahr des Verkantens; an die Exaktheit der Synchronisation der Bewegungen zwischen beiden Seiten sind hohe Anforderungen zu stellen. Zudem stehen die eingefahrenen Rahmenteile vor und verursachen eine Verletzungsgefahr, sofern nicht der hintere Dachteil mindestens so lang ist wie der vordere

Die US-A-3 473 842 befaßt sich mit einem sog. Soft-top, d. h. mit einem beweglichen Dach, das von einem über seine ganze Länge durchgehenden Bezug übergriffen ist. Dort ist ein Faltungsmechanismus für diesen Bezug gezeigt, der für eine Einfaltung dieses Bezuges bei der vollständigen Dachöffnung sorgt. Dabei kommt es über einen Scherengittermechanismus zu einer durch Faltenbildung eingetretenen Verkürzung des Bezugstoffs in sich.

Der Erfindung liegt das Problem zugrunde, bei einem gattungsgemäßen Kraftfahrzeug eine Verbesserung der Ablagekinematik zu erreichen.

Die Erfindung löst dieses Problem durch ein Kraftfahrzeug mit den Merkmalen des Anspruchs 1 sowie durch ein Kraftfahrzeug mit dem Merkmalen des Anspruchs 2. Zu vorteilhaften Ausgestaltungen und Weiterbildungen der Erfindung wird auf die weiteren Ansprüche 2 bis 15 verwiesen.

Mit der Ausbildung nach Anspruch 1 kann der mittlere Dachabschnitt des separat öffnungsfähigen vorderen Dachteils, der sich bis zu den äußeren Kantenbereichen erstrecken kann, über eine verkantungsfreie Bewegung an stabilen, bei geschlossenem Dach längs erstreckten Trägern nach hinten bewegbar sein, ohne daß die Träger in andere Säulen einlaufen müßten und daher in ihrem Querschnitt beschränkt wären. Dadurch, daß zudem die Träger zumindest über den mittleren Dachabschnitt miteinander gekoppelt sind, sind an die Synchronisierung der Bewegungen beider Seiten weiter verringerte Ansprüche zu stellen. Bei einem sphärischen Gelenk reicht sogar ein Antrieb für die Gesamtverlagerung des vorderen Dachteils über oder unter den hinteren Dachteil aus.

Mit der Ausbildung nach Anspruch 2 ist es ermöglicht, auch die seitlichen Rahmenteile des vorderen Dachteils in üblicher Breite und Höhe auszubilden, so daß sie eine hohe Stabilität aufweisen und bei geschlossenem Dach als von außen sichtbare Teile fluchtend an seitliche Säulen eines dahinter liegenden Dachteils anschließen und dennoch in Zusatzfunktion bewegte Längsträger ausbilden können.

Anders als im Stand der Technik muß auch nicht der dahinter liegende Dachteil eine zumindest gleichgroße Längserstreckung wie der vordere Dachteil haben, um ein Überstehen der heckwärts verlagerten Träger, die im Ausführungsbeispiel als seitliche Rahmenteile ausgebildet sind, zu verhindern. Bei einer vollständigen Dachöffnung ist daher der benötigte Stauraum in Fahrzeuglängsrichtung verkleinert. Bei einer Dachöffnung nach Art eines Targafahrzeugs ist zudem der freie Kopfraum vergrößert und eine Verletzungsgefahr an vorstehenden Enden der Rahmenteile vermieden.

Eine vorteilhafte Verlagerbarkeit der seitlichen Rahmenteile über Schwenkbewegungen stellt sicher, daß Verkantungen bei der Bewegung ausgeschlossen sind und konstruktiv einfache Schwenkgelenke verwendet werden können.

Eine Bewegung der seitlichen Rahmenteile derart, daß ihre Verbindungen mit dem mittleren Dachabschnitt in denselben vertikalen Ebenen bleiben, stellt sicher, daß keine Spannungen in den mittleren Dachabschnitt eingetragen werden und dieser zumindest über seine Quererstreckung starr sein kann.

Sofern die seitlichen Rahmenteile über seitlichen Säulen des dahinter liegenden Dachteils zugeordnete Gestängeteile einschwenkbar sind, kann ein erheblicher Querabstand der eingeschwenkten Rahmenteile zu den Querrandbereichen des hinteren Dachteils erreicht werden. Dadurch können die Rahmenteile dann in dem durch die Wölbung einer Heckscheibe unter dieser gebildeten Raum liegen, ohne die Dicke des hinteren Dachteils wesentlich zu vergrößern.

Wenn die Gestängeteile gegenüber den seitlichen Säulen und die seitlichen Rahmenteile gegenüber den Gestängeteilen schwenkbar sind und die Schwenkachsen der Gestängeteile gegenüber den seitlichen Säulen und die Schwenkachsen der seitlichen Rahmenteile gegenüber den Gestängeteilen sich in einem Punkt schneiden, ist insgesamt ein räumliches Getriebe geschaffen, bei dem ein flüssiger Bewegungsablauf mit gleichzeitiger Einwärts- und Abwärtsverlagerung der seitlichen Rahmenteile ermöglicht ist, ohne daß hierfür weitere Maßnahmen erforderlich wären. Alle Gelenke können als konstruktiv einfache reine Schwenkgelenke mit jeweils einem Freiheitsgrad ausgeführt werden.

Wenn die beiden seitlichen Rahmenteile in ihrem vorderen Bereich nicht nur über den mittleren Dachabschnitt, sondern über eine zusätzliche Querkopplung miteinander verbunden sind, ist der mittlere Dachabschnitt auch bei großen Fertigungstoleranzen von Spannungen entlastet. Er kann beispielsweise vollständig aus Glas oder einem transparenten Kunststoff bestehen oder kann bei Verwendung der zusätzlichen Querkopplung auch aus einem flexiblen Material bestehen, da er selbst dann keine Kräfte bei der Bewegung übertragen muß.

Dabei reicht bei einem gebildeten sphärischen Getriebe ein einziger Antrieb zur Bewegung der Rahmenteile beider Seiten aus. In jedem Fall müssen keine gesonderten Synchronisierungsmaßnahmen vorgesehen werden.

Insbesondere kann vorteilhaft das erfindungsgemäße Fahrzeug auch eine vollständige Dachöffnung aus der Teilöffnungsstellung heraus ermöglichen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine erfindungsgemäßes Kraftfahrzeug in schematischer Seitenansicht bei geschlossenem Dach,
- Fig. 2: eine perspektivische Einzelteildarstellung des Daches in geschlossener Stellung nach Fig. 1 mit zusätzlich gestrichelt eingezeichneten und eigentlich in dieser Ansicht verdeckten Gestängeteilen, wobei auf der rechten Fahrzeugseite die Außenverkleidungen weggelassen sind,
- Fig. 3: eine ähnliche Ansicht wie Fig. 2 bei angehobenem mittleren Dachabschnitt und noch in Ausgangsstellung verbleibenden seitlichen Rahmenteilen,
- Fig. 4: das Detail IV in Fig. 3,
- Fig. 5: eine ähnliche Ansicht wie Fig. 3 bei beginnender Dachöffnung,

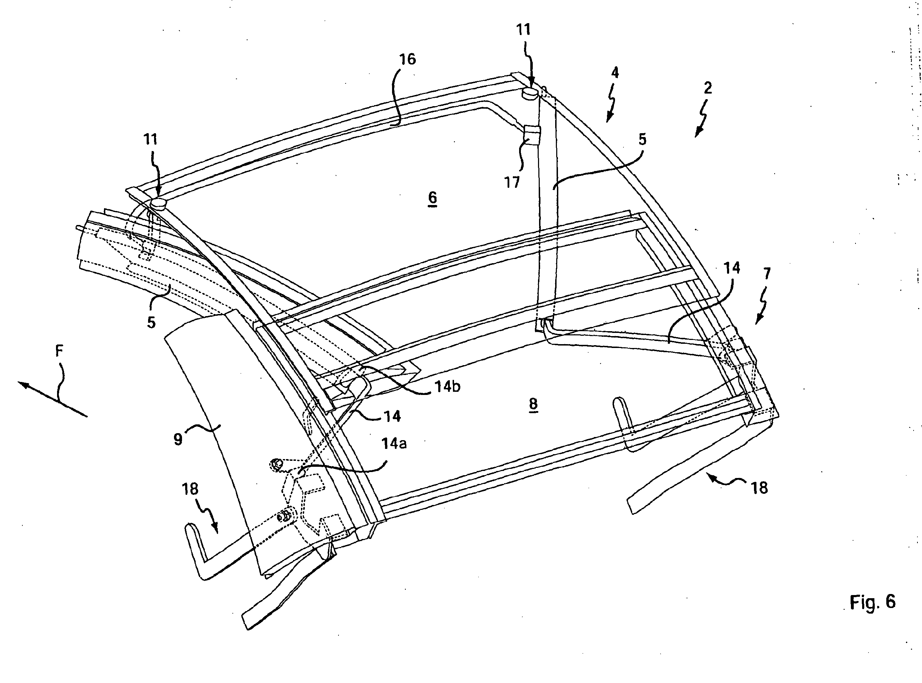

- Fig. 6: eine ähnliche Ansicht wie Fig. 5 bei weiter fortschreitender Dachöffnung,
- Fig. 7: eine ähnliche Ansicht wie Fig. 6 bei vollständig geöffnetem vorderem Dachteil,

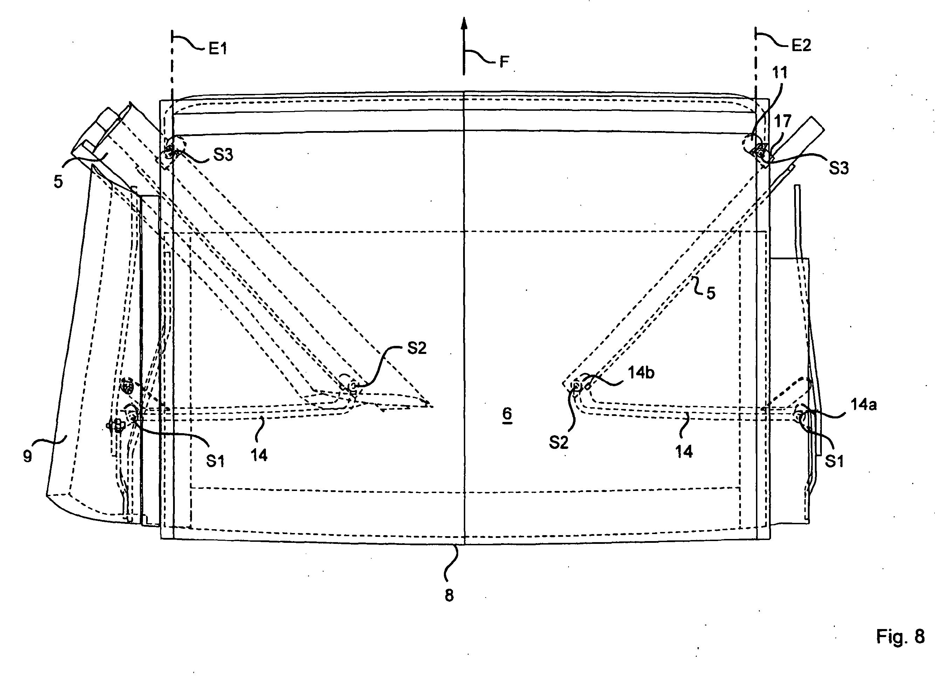

- Fig. 8: eine Draufsicht auf das Dach in Stellung nach Fig. 7,
- Fig. 9: eine Seitenansicht des Daches in geschlossener Stellung nach Fig. 2,

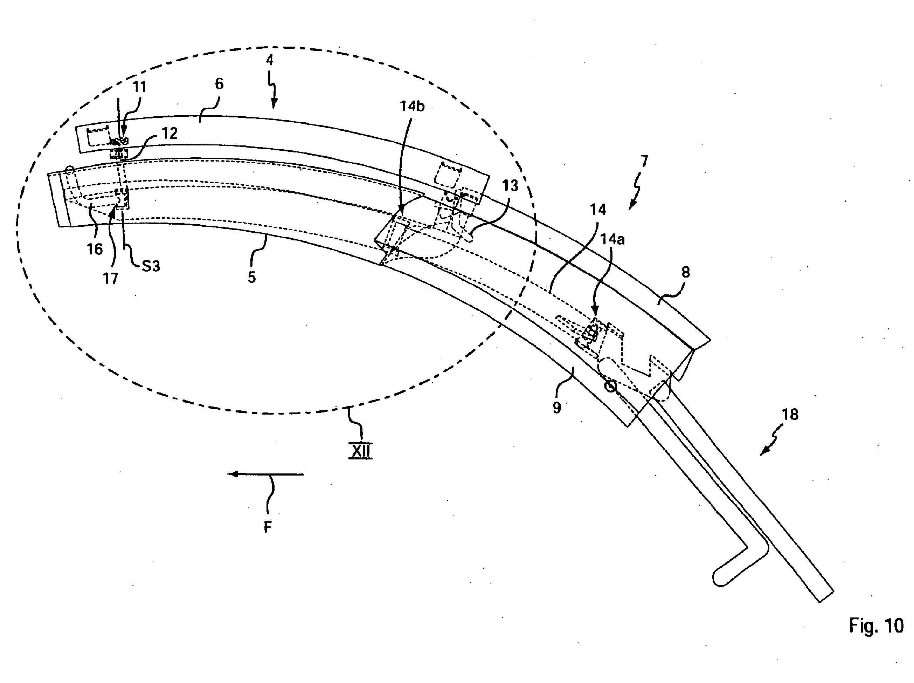

- Fig. 10: eine ähnliche Ansicht wie Fig. 9 während der Öffnung des vorderen Dachteils,

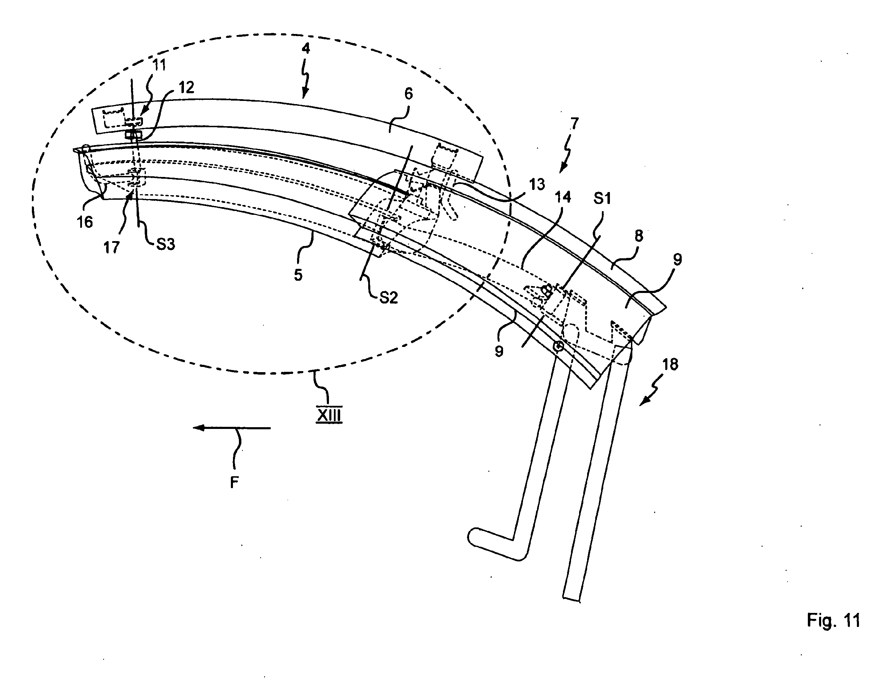

- Fig. 11: eine ähnliche Ansicht wie Fig. 10 während der gleichzeitigen Öffnung auch des hinteren Dachteils,

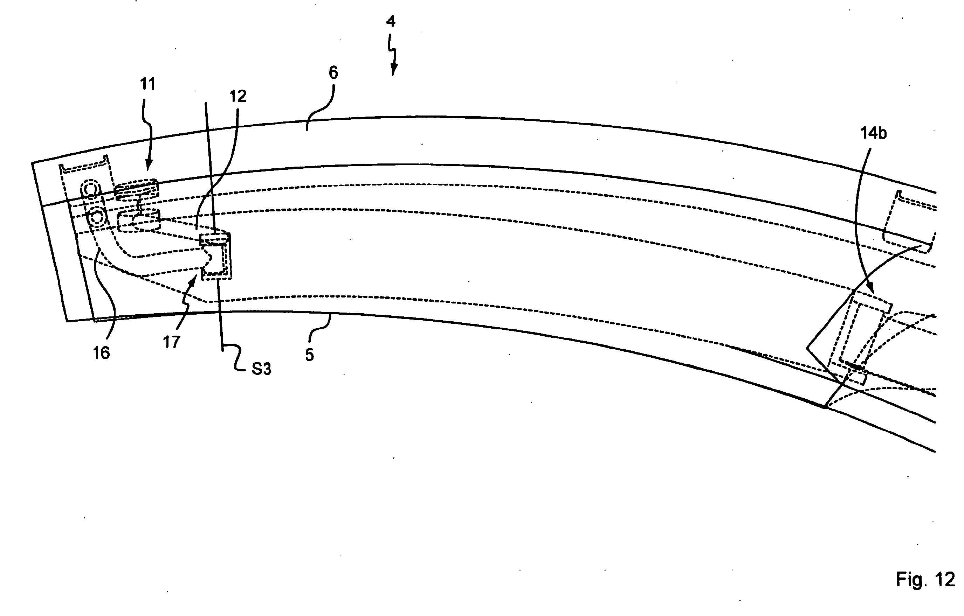

- Fig. 12: das Detail XII in Fig. 9,

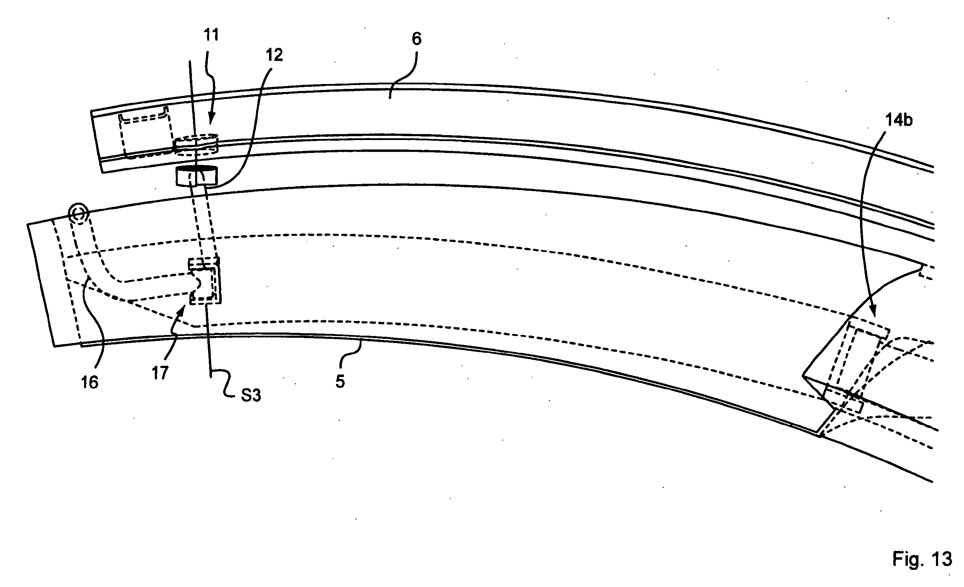

- Fig. 13: das Detail XIII in Fig. 10,

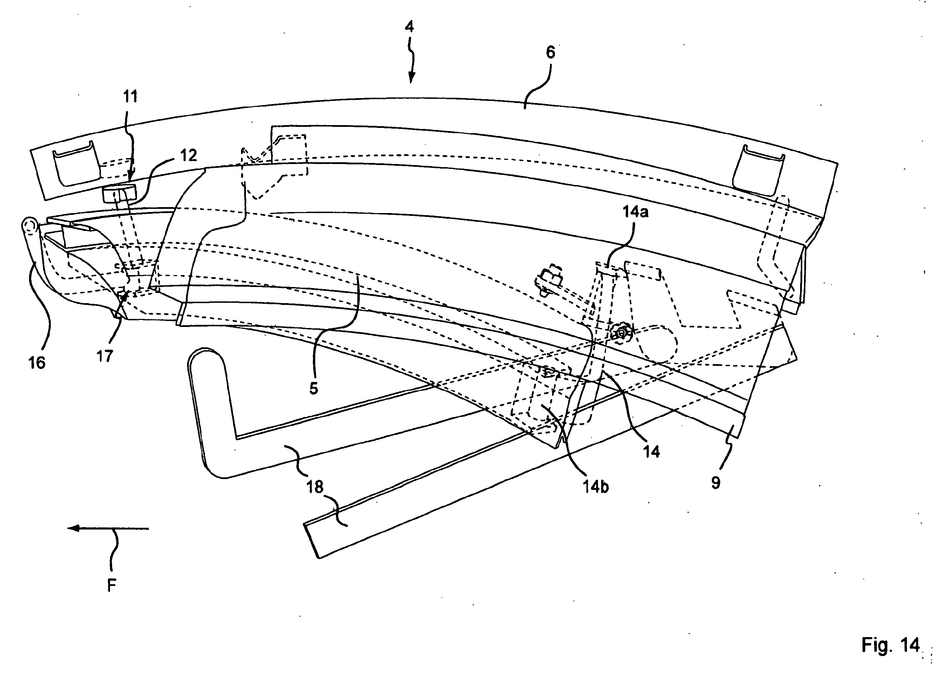

- Fig. 14: das Dach in vollständig abgelegter Cabriolet-Stellung.

Das erfindungsgemäße Kraftfahrzeug 1 ist gemäß dem gezeichneten Ausführungsbeispiel als Vollcabriolet-Fahrzeug ausgebildet. Hierzu ist das Fahrzeug 1 mit einem vollständig öffnungsfähigen und in die Karosserie 3 absenkbaren Dach 2 versehen. Dies ist jedoch nicht zwingend. Auch ein Fahrzeug mit nur einer Teilöffnungsmöglichkeit des Daches nach Art eines Targafahrzeugs kann erfindungsgemäß ausgebildet sein.

Das Dach 2 umfaßt hier einen separat öffnungsfähigen vorderen Dachteil 4, wobei alternativ auch mehrere hintereinander möglich wären, der längs erstreckte Träger 5 und einen zumindest mittleren Dachabschnitt 6 umfaßt. Dieser deckt bei geschlossenem Dach 2 den in Fahrzeugquerrichtung zwischen den Trägern 5 liegenden Bereich ab und kann auch seitlich die Träger 5 zumindest teilweise mit überdecken, was im Ausführungsbeispiel nicht gezeichnet ist. Die Träger 5 liegen daher hier zumindest im wesentlichen bei geschlossenem Dach 2 seitlich neben dem mittleren Dachabschnitt 6 als seitliche Rahmenteile. Im folgenden sind daher die Begriffe Träger und seitliche Rahmenteile gleichgesetzt, ohne daß dies zwingend wäre.

Gegen die Fahrtrichtung F schließt bei geschlossenem Dach 2 an den vorderen Dachteil 4 zumindest ein weiterer Dachteil 7 an, der in der Zeichnung mit nur zwei hintereinander liegenden Dachteilen 4, 7 den hintersten Dachteil ausbildet und eine Heckscheibe 8 umfaßt, die von seitlichen Säulen 9, häufig auch als C-Säulen bezeichnet, eingefaßt und mit diesen starr verbunden ist.

Der mittlere Dachabschnitt 6 kann eine insgesamt starre oder mit einem starren Rahmen versehene Baueinheit oder einen Lamellen- oder Soft-Top-Bereich bilden. Insbesondere empfiehlt sich für die unten beschriebene Halterung des mittleren Dachabschnitts 6 über oder unter der Heckscheibe 8 eine im wesentlichen transparente Ausbildung.

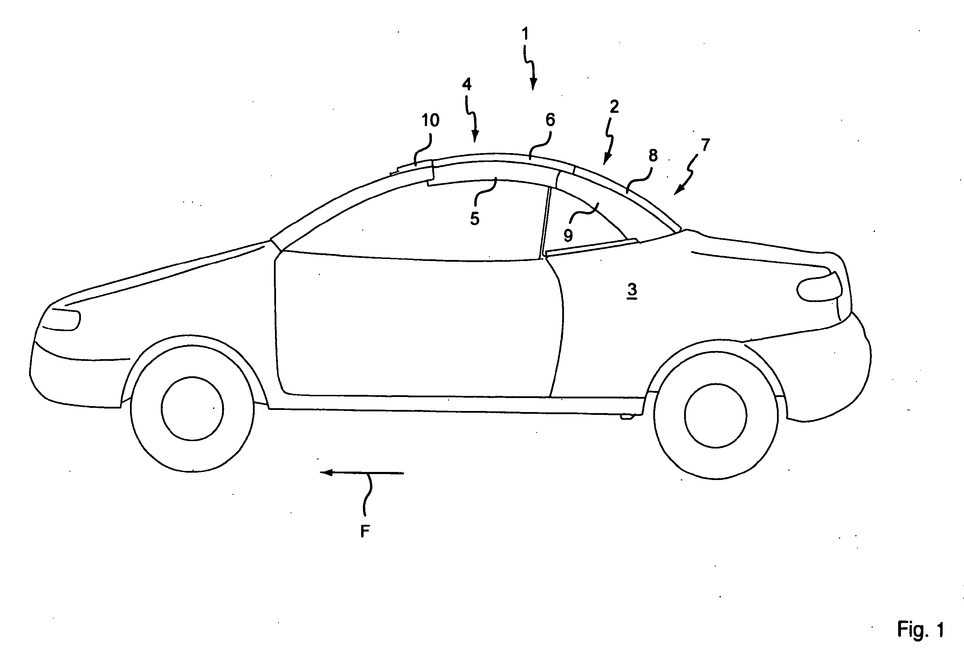

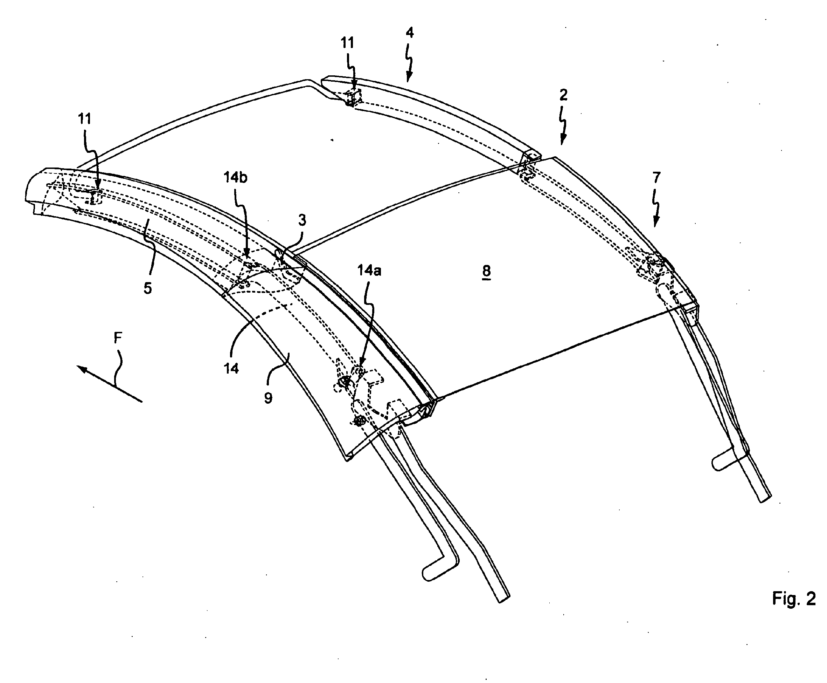

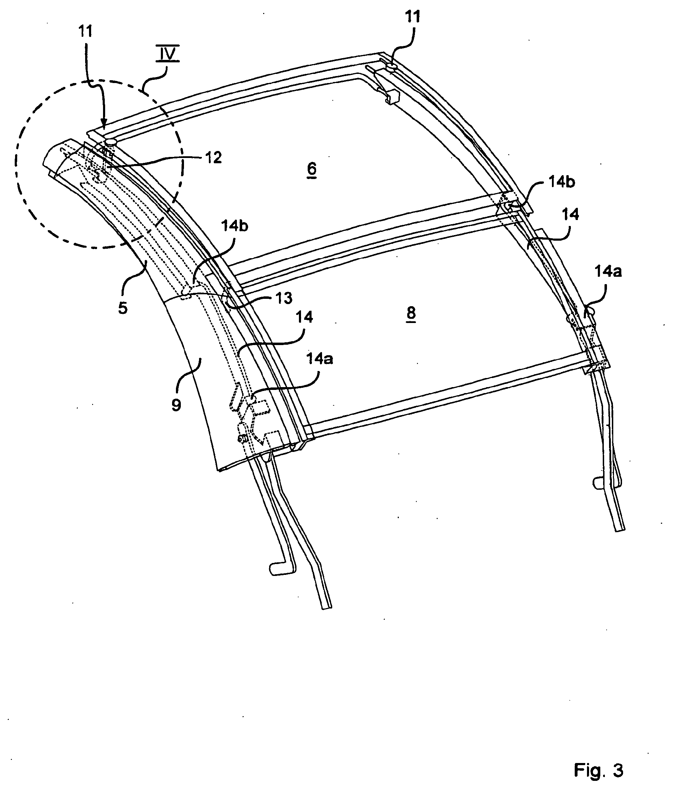

Der mittlere Dachabschnitt 6 ist aus der geschlossenen Dachstellung (Fig. 1, Fig. 2) heraus zunächst über Aufstellen von zwei seitlichen, den vorderen Verbindungen 11 zwischen den Rahmenteilen 5 und dem Dachabschnitt 6 zugeordneten Hebeln 12 und über zwei hintere Hebel 13 anhebbar (Fig. 3). Das hintere Ende ist dabei sowohl in der geschlossenen als auch in jeder bewegten oder geöffneten Stellung des vorderen Dachteils 4 an dem hinteren Dachteil 7 zwischen den seitlichen Säulen 9 und der Heckscheibe 8 gehalten. Hierfür dienen die längs verschieblichen und ebenfalls durch Schwenken um eine quer zum Fahrzeug 1 liegende Achse aufstellbare hintere Führungshebel 13, die in Fig. 2 in abwärts und in Fig. 3 in aufwärts verschwenkter Lage gezeigt sind.

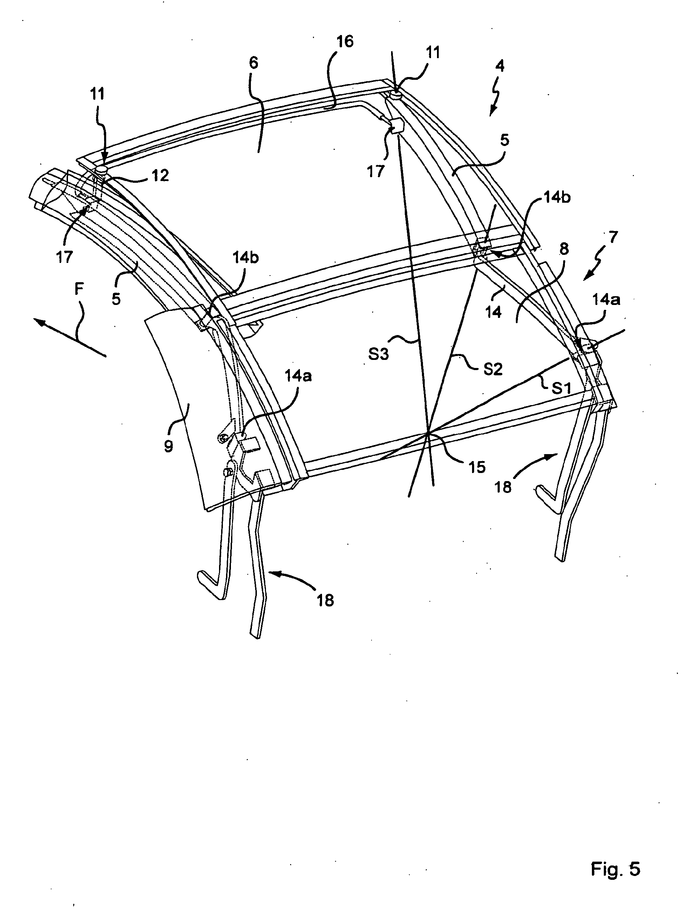

In der vorne und hinten angehobenen Stellung ist der mittlere Dachabschnitt 6 in eine nach hinten und hier im wesentlichen parallel zu dem dahinter liegenden Dachteil 7 gehaltene Stellung (Fig. 5 ff.) verlagerbar, wobei diese Bewegung durch Einschwenken der seitlichen Rahmenteile 5 aus ihrer mittelbar oder unmittelbar mit einem Windschutzscheibenrahmen 10 verriegelten Ausgangslage bewirkt ist. Die Verbindungen 11 bewegen sich dabei hingegen ohne Komponente quer zur Fahrtrichtung F in den vertikalen Ebenen E1 und E2.

Im gezeichneten Ausführungsbeispiel ist der Dachabschnitt 6 in geöffneter Stellung oberhalb der Heckscheibe 8 gehalten. Alternativ wäre beispielsweise auch eine Halterung unter der Heckscheibe 8 möglich. In jedem Fall bleibt der Dachabschnitt 6 bei seiner Öffnung mit seinem vorderen Ende an den seitlichen Rahmenteilen 5 geführt. Diese sind hier in geöffneter Stellung unterhalb des hinteren Dachteils 7 gehalten.

Die Verlagerung des Dachabschnitts 6 kann automatisch oder manuell erfolgen. Die so geschaffene Teilöffnungsstellung kann auch eine dauerhafte Fahrstellung bilden.

Die Einwärts-, Abwärts- und Heckwärtsverlagerung der Rahmenteile 5 ist hier über reine Schwenkbewegungen bewirkbar. Hierzu sind die seitlichen Rahmenteile 5 an Gestängeteilen 14 gehalten, die an den seitlichen Säulen 9 des dahinter liegenden Dachteils 7 über die Gelenke 14a schwenkbeweglich angebunden sind und sich von dort aus zu den Rahmenteilen 5 erstrecken, die ihrerseits an den Gestängeteilen 14 über Gelenke 14b ebenfalls schwenkbeweglich angebunden sind. Bei geschlossenen, fluchtend zu den Säulen 9 liegenden seitlichen Rahmenteilen 5 liegen die hier lang und als hochkant breit erstreckte Lenker ausgebildeten Gestängeteile 14 verdeckt innerhalb der Säulen 9.

Die Rahmenteile 5 können im Bereich ihrer vorderen, in geschlossener Stellung dem Windschutzscheibenrahmen 10 zugewandten Enden unterhalb des mittleren Dachabschnitts 6 über zumindest eine zusätzliche Querkopplung 16 miteinander verbunden sein. Diese ist hier als quer verbindendes Rohr ausgebildet und unterhalb der Verbindung 11 und konzentrisch schwenkbar zu dieser an die Rahmenteile 5 angebunden. Damit ist der mittlere Dachabschnitt 6 von Spannungen entlastet und kann beispielsweise komplett aus Glas gebildet sein.

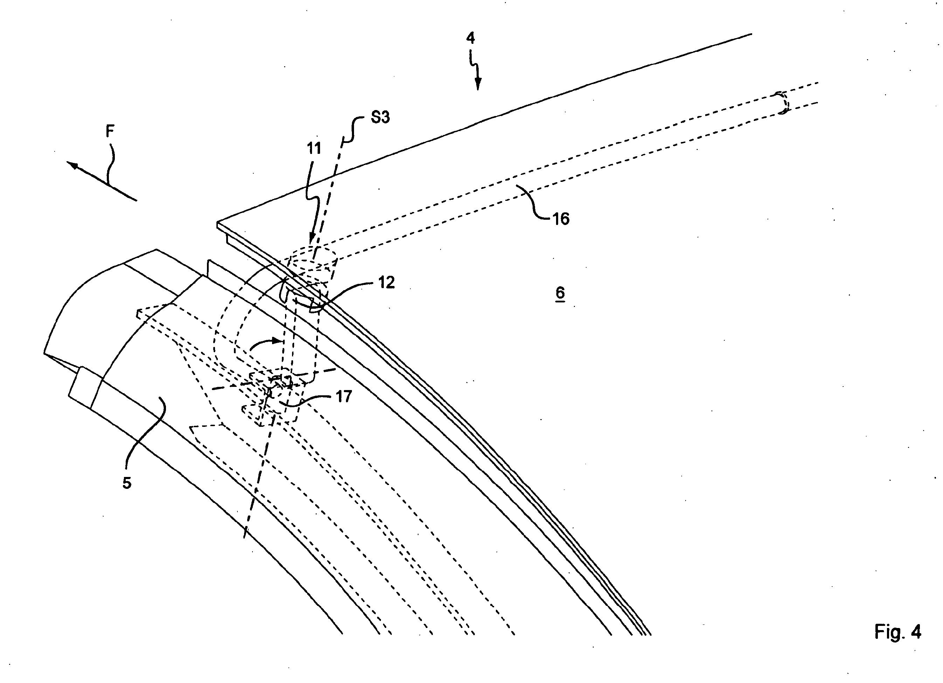

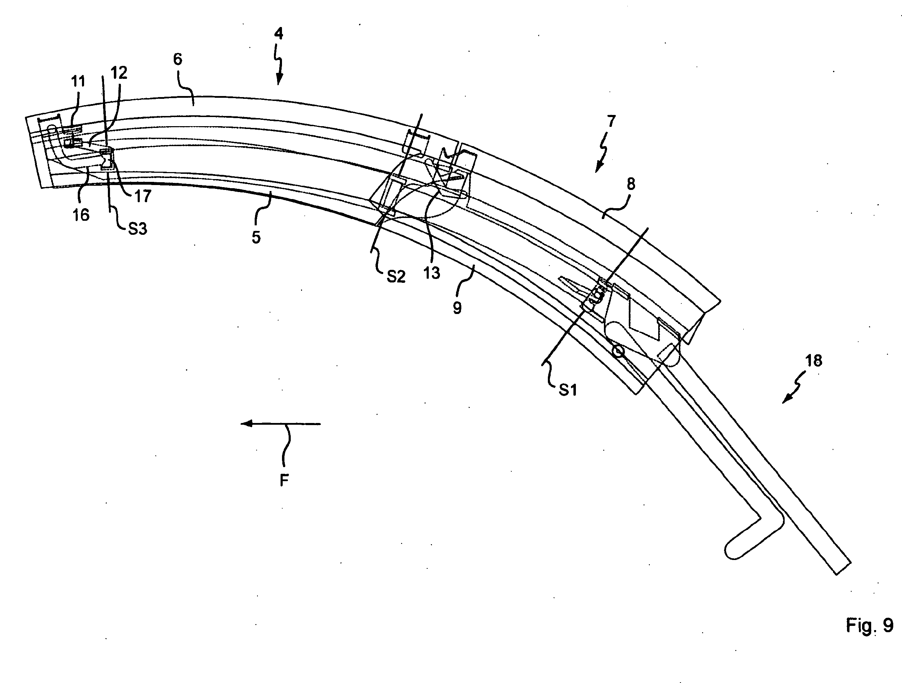

Die Verbindung 17 der Rahmenteile 5 mit der Querkopplung 16 liegt auf derselben Schwenkachse S3 wie die Verbindung 11 der Träger 5 mit dem mittleren Dachabschnitt 6 in dessen aufgestellter, zur Verlagerung nach hinten bereiter Stellung gemäß Fig. 4. Wie in Fig. 9 sichtbar ist, muß in noch eingeschwenkter Stellung des Hebels 12 die Achse der Verbindung 11 noch nicht mit der Achse S3 zusammenfallen. Es genügt, wenn dieser Zustand bei aufgestelltem Hebel 12 erreicht ist. Die Verbindung 11 ist dabei über ein von dem Hebel 12 getragenes Gelenk sichergestellt.

Mit den Gelenken 14a, 14b und den dann um eine gemeinsame Hochachse S3 schwenkbaren Verbindungen 11, 17 einer jeden Fahrzeugseite ist für die Bewegung des vorderen Dachteils 4 insgesamt ein Sechsgelenk gebildet, wobei grundsätzlich auch andere Mehrgelenke in Frage kommen. Das so insgesamt gebildete sphärische Sechsgelenk kann flüssig und verkantungsfrei bewegt werden. Die Verbindungen 11 werden bei der Bewegung nicht in Querrichtung ein- oder auswärts geschwenkt, sondern bleiben während der ganzen Bewegung in der vertikalen Fahrzeuglängsebene E1 bzw. E2.

Alle Gelenke 14a, 14b, 11, 17 sind reine Schwenkgelenke mit jeweils nur einem Freiheitsgrad. Die Schwenkachsen S1, S2, S3 dieser Gelenke schneiden sich in einem gemeinsamen Punkt 15 und bilden somit insgesamt ein räumliches Getriebe, speziell ein sphärisches Getriebe, für die Bewegung des vorderen Dachteils 4 aus.

Dadurch werden die seitlichen Rahmenteile 5 bei Öffnung des vorderen Dachteils 4 gleichzeitig abwärts und heckwärts und auch bezüglich der Fahrzeugquerrichtung einwärts verschwenkt, so daß die Rahmenteile 5 dann unter beispielsweise der Heckscheibe 8 gelagert werden können, während gleichzeitig der mittlere Dachabschnitt über die Hebel 12 hierzu beabstandet oberhalb der Heckscheibe angeordnet werden kann.

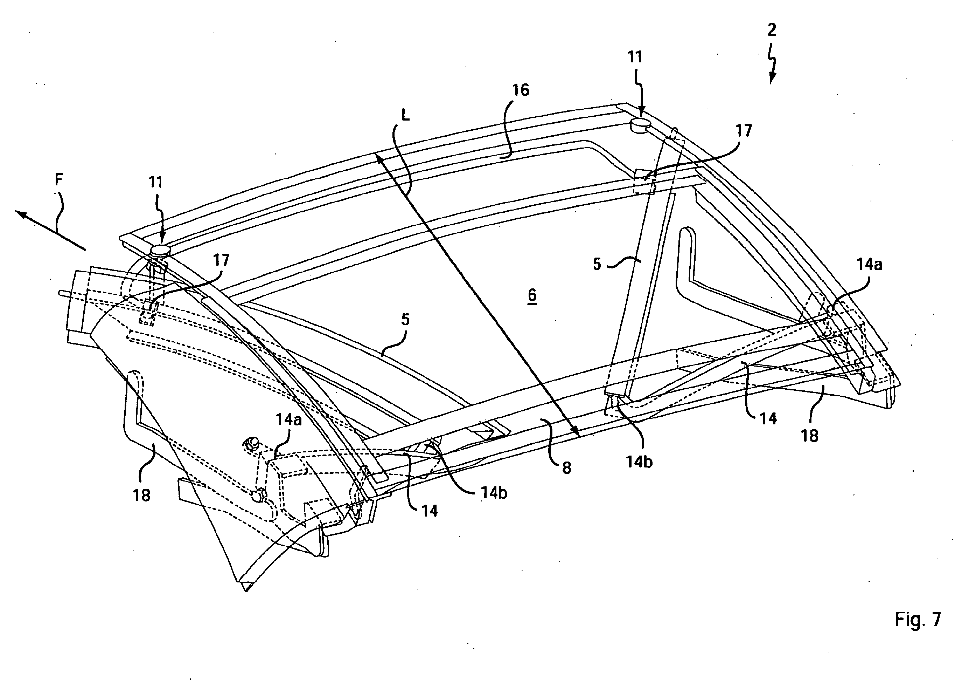

Durch das Einwärtsverschwenken der Gestängeteile 14 um die Gelenke 14a und die gleichzeitige Querkopplung der Rahmenteile 5 in ihrem vorderen Bereich zumindest über den Dachabschnitt 6 - eventuell über die weitere Querkopplung 16 - geraten die Rahmenteile 5 in der nach hinten verlagerten Teilöffnungsstellung des vorderen Dachteils 4 in eine schräg stehende Anordnung unterhalb der Heckscheibe 8, wobei zumindest am Ende der Teilöffnungsbewegung die seitlichen Rahmenteile 5 raumsparend mit ihren bezüglich der Fahrtrichtung F hinteren Enden weiter der Fahrzeugquermitte zugewandt sind als mit ihren vorderen Enden (Fig. 7). Dadurch wird die in Ablagestellung horizontal im Fahrzeug 1 liegende Länge L des hinteren Dachteils 7 von den seitlichen Rahmenteilen 5 praktisch nicht überragt. Der benötigte Ablageraum bei weiterer Öffnung auch des hinteren Dachteils 7 ist dadurch verringert. Der Dachteil 7 kann dabei sowohl nach hinten geschwenkt und dann mit der Heckscheibe zuunterst als auch insbesondere über beispielsweise lang erstreckte Hebel 18 mit seiner Unterkante heckwärts verlagert und dann mit der Heckscheibe 8 nach vorne unten in eine nahezu horizontale Lage schwenken, so daß diese in dem abgelegten Dach 2 dann zuoberst liegt. Das Ablegen auch des hinteren Dachteils 7 kann gleichzeitig mit dem Einfahren des vorderen Dachteils 4 unter oder über den hinteren Dachteil 7 erfolgen, um damit die Gesamtöffnungszeit zu verkürzen. Entsprechendes gilt für die Schließbewegung.

Das erfindungsgemäße Cabriolet-Fahrzeug 1 kann, wie im gezeichneten Ausführungsbeispiel angedeutet, entweder ein mit zumindest einer Rückbank versehenes vier- oder mehrsitziges Fahrzeug oder auch ein Zweisitzer sein, wobei das Dach 2 insgesamt zu seinem Öffnen und Schließen manuell oder voll- oder teilautomatisch bewegbar sein kann.

## Patentansprüche

1. Kraftfahrzeug (1) mit einem gegenüber einem dahinter befindlichen Dachteil (7) separat öffnungsfähigen vorderen Dachteil (4), der einen in Fahrzeugquerrichtung zumindest mittleren Dachabschnitt (6) umfaßt, wobei der Dachabschnitt (6) mit bei geschlossenem Dach (2) im wesentlichen in Fahrzeuglängsrichtung laufenden Trägern (5) verbunden (11) ist,
**dadurch gekennzeichnet,**
**daß** die Träger (5) mit ihren rückwärtigen Enden quer einwärts und heckwärts verlagerbar sind und dabei den Dachabschnitt (6) mit heckwärts in eine Stellung über oder unter dem hinteren Dachteil (7) ziehen.

2. Kraftfahrzeug (1) mit zumindest einem gegenüber einem dahinter befindlichen Dachteil (7) separat öffnungsfähigen vorderen Dachteil (4), der seitliche Rahmenteile (5) und einen in Fahrzeugquerrichtung zumindest mittleren Dachabschnitt (6) umfaßt, wobei die Rahmenteile zumindest während eines Teils einer Dachöffnungsbewegung als unterstützende Träger für den in geschlossener Dachstellung den Raum zwischen diesen überdeckenden, mittleren Dachabschnitt (6) dienen, wobei der mittlere Dachabschnitt (6) mit den seitlichen Rahmenteilen (5) aus der geschlossenen Dachstellung heraus nach hinten in eine Teilöffnungsstellung verlagerbar ist, insbesondere nach Anspruch 1,
**dadurch gekennzeichnet,**
**daß** die seitlichen Rahmenteile (5) bei bestehender Verbindung (11) mit dem mittleren Dachabzuschnitt (6) während der Teilöffnungsbewegung bereichsweise mit einer Einwärtsbewegungskomponente in Fahrzeugquerrichtung unter den dahinter liegenden Dachteil (7) verlagerbar sind und dabei den mittleren Dachabschnitt (6) in eine Stellung über oder unter dem hinteren Dachteil (7) ziehen.

3. Kraftfahrzeug (1) nach einem der Ansprüche 1 oder 2
**dadurch gekennzeichnet,**
**daß** die Träger (5) über Schwenkbewegungen verlagerbar sind.

4. Kraftfahrzeug (1) nach einem der Ansprüche 1 bis 3,
**dadurch gekennzeichnet,**
**daß** die Verbindungen (11) zwischen dem mittleren Dachabschnitt (6) und den Trägern (5) während der Teilöffnungsbewegung in denselben vertikalen Fahrzeuglängsebenen (E1;E2) bleiben.

5. Kraftfahrzeug (1) nach einem der Ansprüche 1 bis 4,
**dadurch gekennzeichnet,**
**daß** die Träger (5) im Bereich ihrer hinteren Enden mit Hilfe von Gestängeteilen (14) einschwenkbar sind, die seitlichen Säulen (9) des dahinter liegenden Dachteils (7) zugeordnet sind.

6. Kraftfahrzeug (1) nach Anspruch 5,
**dadurch gekennzeichnet,**
**daß** die Gestängeteile (14) gegenüber den seitlichen Säulen (9), die Träger (5) gegenüber den Gestängeteilen (14) und die Träger (5) gegenüber dem mittleren Dachabschnitt (6) schwenkbar sind.

7. Kraftfahrzeug (1) nach Anspruch 6,
**dadurch gekennzeichnet,**
**daß** die Schwenkachsen (S1) der Gestängeteile (14) gegenüber den seitlichen Säulen (9), die Schwenkachsen (S2) der Träger (5) gegenüber den Gestängeteilen (14) und die Schwenkachsen (S3) der Träger (5) gegenüber dem mittleren Dachabschnitt (6) sich in einem gemeinsamen Punkt (15) schneiden.

8. Kraftfahrzeug (1) nach einem der Ansprüche 1 bis 7,
**dadurch gekennzeichnet,**
**daß** für die Verlagerung der seitlichen Rahmenteile (5) unter den dahinter liegenden Dachteil (7) ein räumliches Getriebe vorgesehen ist.

9. Kraftfahrzeug (1) nach Anspruch 8,
**dadurch gekennzeichnet,**
**daß** das räumliche Getriebe ein sphärisches Getriebe ist.

10. Kraftfahrzeug (1) nach einem der Ansprüche 8 oder 9,
**dadurch gekennzeichnet,**
**daß** alle Gelenke (14a;14b;11,17) des Getriebes reine Schwenkgelenke sind.

11. Kraftfahrzeug (1) nach einem der Ansprüche 1 bis 10,
**dadurch gekennzeichnet,**
**daß** die Träger (5) in Teilöffnungsstellung derart schräg liegen, daß sie mit ihren bezüglich der Fahrtrichtung (F) hinteren Enden weiter der Fahrzeugquermitte zugewandt sind als mit ihren vorderen Enden.

12. Kraftfahrzeug (1) nach einem der Ansprüche 1 bis 11,
**dadurch gekennzeichnet,**
**daß** die Träger (5) im Bereich ihrer vorderen, in geschlossener Stellung einem Windschutzscheibenrahmen (10) zugewandten Enden außerhalb des mittleren Dachabschnitts (6) über zumindest eine zusätzliche Querkopplung (16) miteinander verbunden sind.

13. Kraftfahrzeug nach Anspruch 12,
**dadurch gekennzeichnet,**
**daß** die Verbindung (17) der Träger (5) mit der Querkopplung (16) auf derselben Schwenkachse (S3) liegt wie die Verbindung (11) der Träger (5) mit dem mittleren Dachabschnitt (6) in dessen aufgestellter, zur Verlagerung nach hinten bereiter Stellung.

14. Kraftfahrzeug (1) nach einem der Ansprüche 1 bis 13,
**dadurch gekennzeichnet,**
**daß** dieses ein Cabriolet-Fahrzeug ist und das Dach (2) aus der Teilöffnungsstellung heraus vollständig in die Karosserie (3) absenkbar ist.

15. Kraftfahrzeug (1) nach Anspruch 14,
**dadurch gekennzeichnet,**
**daß** der hintere Dachteil (7) in Öffnungsstellung mit seiner Außenseite nach oben weist.

## Claims

1. Motor vehicle (1) comprising a front roof part (4) that can be opened separately with respect to a roof part (7) located behind it, said front roof part (4) comprising a roof portion (6) that is at least central in the transverse direction of the vehicle, said roof portion (6) being connected (11) with supports (5) that extend substantially in the longitudinal direction of the vehicle when the roof (2) is closed, **characterized in that** the rear ends of the supports (5) are movable inwardly in a transverse direction and towards the rear, thereby pulling the roof portion (6) towards the rear into a position above or below the rear roof part (7).

2. Motor vehicle (1) comprising at least one front roof part (4) that can be opened separately with respect to a roof part (7) located behind it, said front roof part (4) comprising lateral frame members (5) and a roof portion (6) that is at least central in the transverse direction of the vehicle, said frame members serving, during at least part of a roof opening movement, as staying supports for the central roof portion (6) that covers the space between them in the closed roof position, said central roof portion (6) being movable towards the rear with the lateral frame members (5), from the closed roof position into a partially opened position, in particular according to claim 1, **characterized in that** the lateral frame members (5), when in connection (11) with the central roof portion (6), can be moved, during the partial opening movement, under the roof part (7) which is located behind the roof portion (6), in parts by an inward movement component in the transverse direction of the vehicle, thereby pulling the central roof portion (6) towards the rear into a position above or below the rear roof part (7).

3. Motor vehicle (1) according to any one of claims 1 or 2, **characterized in that** the supports (5) are movable by pivoting movements.

4. Motor vehicle (1) according to any one of claims 1 to 3, **characterized in that** the connections (11) between the central roof portion (6) and the supports (5) remain in the same vertical longitudinal planes (E1; E2) of the vehicle during the partial opening movement.

5. Motor vehicle (1) according to any one of claims 1 to 4, **characterized in that** the supports (5) can be pivoted inward in the region of their rear ends with the aid of linkage members (14) that are assigned to lateral columns (9) of the roof part (7) located behind the supports (5).

6. Motor vehicle (1) according to claim 5, **characterized in that** the linkage members (14) are pivotable with respect to the lateral columns (9), the supports (5) are pivotable with respect to the linkage members (14), and the supports (5) are pivotable with respect to the central roof portion (6).

7. Motor vehicle (1) according to claim 6, **characterized in that** there is one common point (15) of intersection of the pivoting axes (S1) of the linkage members (14) with respect to the lateral columns (9), the pivoting axes (S2) of the supports (5) with respect to the linkage members (14), and the pivoting axes (S3) of the supports (5) with respect to the central roof portion (6).

8. Motor vehicle (1) according to any one of claims 1 to 7, **characterized in that** a spatial transmission is provided for moving the lateral frame members (5) under the roof part (7) located behind them.

9. Motor vehicle (1) according to claim 8, **characterized in that** the spatial transmission is a spherical transmission.

10. Motor vehicle (1) according to any one of claims 8 or 9, **characterized in that** all joints (14a; 14b; 11, 17) of the drive mechanism are pure pivot joints.

11. Motor vehicle (1) according to any one of claims 1 to 10, **characterized in that** the supports (5) are inclined in the partially opened position such that, with respect to the driving direction (F), their rear ends are turned more towards the transverse center of the vehicle than their front ends.

12. Motor vehicle (1) according to any one of claims 1 to 11, **characterized in that** the supports (5) are connected with each other in the region of their front ends that are turned towards a windshield frame (10) in the closed position, outside the central roof portion (6), by at least one additional cross coupling (16).

13. Motor vehicle according to claim 12, **characterized in that** the connection (17) of the supports (5) with the cross coupling (16) is located on the same pivoting axis (S3) as the connection (11) of the supports (5) with the central roof portion (6) in the upright position of the latter, ready for movement towards the rear.

14. Motor vehicle (1) according to any one of claims 1 to 13, **characterized in that** said motor vehicle is a convertible vehicle and the roof (2) can be lowered completely into the vehicle body (3) from the partially opened position.

15. Motor vehicle (1) according to claim 14, **characterized in that** the outer surface of the rear roof part (7) points upwards in the opened position.

## Revendications

1. Véhicule automobile (1) comprenant une partie de toit avant (4) ouvrable séparément par rapport à une partie de toit (7) située derrière cette première, ladite partie de toit avant (4) comprenant une section de toit (6) qui est au moins centrale en direction transversale du véhicule, ladite section de toit (6) étant reliée (11) avec des supports (5) s'étendant généralement en direction longitudinale du véhicule quand le toit (2) est fermé, **caractérisé en ce que** les extrémités arrières des supports (5) peuvent être déplacées transversalement vers l'intérieur et vers l'arrière, entraînant ainsi ladite section de toit (6) vers l'arrière dans une position au-dessus ou au-dessous de ladite partie de toit arrière (7).

2. Véhicule automobile (1) comprenant au moins une partie de toit avant (4) ouvrable séparément par rapport à une partie de toit (7) située derrière cette première, ladite partie de toit avant (4) comprenant des éléments de cadre latéraux (5) et une section de toit (6) qui est au moins centrale en direction transversale du véhicule, lesdits éléments de cadre servant, pendant au moins une partie du mouvement d'ouverture du toit, comme supports d'appui pour la section de toit centrale (6) qui couvre l'espace entre eux en position fermée du toit, ladite section de toit centrale (6) étant déplaçable vers l'arrière avec les éléments de cadre latéraux (5), à partir de la position fermée du toit vers une position d'ouverture partielle, particulièrement selon la revendication 1, **caractérisé en ce que**, lorsqu'il y a une liaison (11) avec la section de toit centrale (6) des parties des éléments de cadre latéraux (5) peuvent être déplacées, pendant le mouvement d'ouverture partielle, sous la partie de toit (7), qui est disposée derrière la section de toit (6), par un composant de mouvement dirigé vers l'intérieur en direction transversale du véhicule, entraînant ainsi la section de toit centrale (6) vers l'arrière, dans une position au-dessus ou au-dessous de la partie de toit arrière (7).

3. Véhicule automobile (1) selon l'une quelconque des revendications 1 ou 2, **caractérisé en ce que** les supports (5) peuvent être déplacés par des mouvements pivotants.

4. Véhicule automobile (1) selon l'une quelconque des revendications 1 à 3, **caractérisé en ce que** les liaisons (11) entre la partie de toit centrale (6) et les supports (5) restent dans les mêmes plans longitudinaux verticaux (E1; E2) du véhicule pendant le mouvement d'ouverture partielle.

5. Véhicule automobile (1) selon l'une quelconque des revendications 1 à 4, **caractérisé en ce que** les supports (5) peuvent être pivotés vers l'intérieur dans la région de leurs extrémités arrières à l'aide d'éléments de timonerie (14) qui sont associés à des montants latéraux (9) de la partie de toit (7) disposée derrière les supports (5).

6. Véhicule automobile (1) selon la revendication 5, **caractérisé en ce que** les éléments de timonerie (14) peuvent être pivotés par rapport aux montants latéraux (9), les supports (5) peuvent être pivotés par rapport aux éléments de timonerie (14), et les supports (5) peuvent être pivotés par rapport à la section de toit centrale (6).

7. Véhicule automobile (1) selon la revendication 6, **caractérisé en ce qu'**il y a un point d'intersection commun (15) des axes de pivotement (S1) des éléments de timonerie (14) par rapport aux montants latéraux (9), des axes de pivotement (S2) des supports (5) par rapport aux éléments de timonerie (14), et des axes de pivotement (S3) des supports (5) par rapport à la section de toit centrale (6).

8. Véhicule automobile (1) selon l'une quelconque des revendications 1 à 7, **caractérisé en ce que** l'on prévoit une transmission spatiale pour déplacer les éléments de cadre latéraux (5) sous la partie de toit (7) disposée derrière ceux-ci.

9. Véhicule automobile (1) selon la revendication 8, **caractérisé en ce que** la transmission spatiale est une transmission sphérique.

10. Véhicule automobile (1) selon l'une quelconque des revendications 8 ou 9, **caractérisé en ce que** toutes les articulations (14a; 14b; 11, 17) de la transmission sont exclusivement des articulations pivotantes.

11. Véhicule automobile (1) selon l'une quelconque des revendications 1 à 10, **caractérisé en ce que** les supports (5), en position d'ouverture partielle, sont tellement inclinés que leurs extrémités arrières en direction de marche (F) sont tournées plus vers le centre transversale du véhicule que leurs extrémités avant.

12. Véhicule automobile (1) selon l'une quelconque des revendications 1 à 11, **caractérisé en ce que** les supports (5) sont reliés entre eux, dans la région de leurs extrémités avant qui sont tournées vers un cadre de pare-brise (10) en position fermée, hors la section de toit centrale (6) par au moins un couplage transversal additionnel (16).

13. Véhicule automobile selon la revendication 12, **caractérisé en ce que** la liaison (17) des supports (5) avec le couplage transversal (16) est située sur le même axe de pivotement (S3) que la liaison (11) des supports (5) avec la partie de toit centrale (6) en position debout de celle-ci, prêt à être déplacée vers l'arrière.

14. Véhicule automobile (1) selon l'une quelconque des revendications 1 à 13, **caractérisé en ce que** ledit véhicule automobile est un cabriolet et que le toit (2) est complètement escamotable dans la carrosserie (3) à partir de la position d'ouverture partielle.

15. Véhicule automobile (1) selon la revendication 14, **caractérisé en ce que** la face externe de la partie de toit arrière (7) est dirigée vers le haut en position ouverte.
